(19) Europäisches Patentamt
European Patent Office
Office européen des brevets

(11) **EP 4 660 889 A1**

(12) **EUROPEAN PATENT APPLICATION**

(43) Date of publication:
**10.12.2025   Bulletin 2025/50**

(21) Application number: **25179832.8**

(22) Date of filing: **30.05.2025**

(51) International Patent Classification (IPC):
**G06N 3/096** (2023.01)        **G06N 3/045** (2023.01)
**G06N 3/082** (2023.01)        **G06N 3/0895** (2023.01)

(52) Cooperative Patent Classification (CPC):
**G06N 3/096; G06N 3/045; G06N 3/082;
G06N 3/0895**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority:   **03.06.2024   IN 202421043080**

(71) Applicant: **Tata Consultancy Services Limited
Maharashtra (IN)**

(72) Inventors:
• **DEY, Swarnava**
  **700160 Kolkata, West Bengal (IN)**
• **MUKHERJEE, Arijit**
  **700160 Kolkata, West Bengal (IN)**
• **PAL, Arpan**
  **700160 Kolkata, West Bengal (IN)**
• **UKIL, Arijit**
  **700160 Kolkata, West Bengal (IN)**

(74) Representative: **Goddar, Heinz J.
Boehmert & Boehmert
Anwaltspartnerschaft mbB
Pettenkoferstrasse 22
80336 München (DE)**

(54) **METHOD AND SYSTEM FOR TASK AGNOSTIC DISTILLATION IN FOUNDATION MODELS**

(57)     The present invention generally relates to the field of deep learning, and, more particularly, to a method and system for task agnostic distillation in foundation models. Conventional distillation methods are not scalable and also does not handle mismatches between embedding sizes of teacher and student models. Thus, embodiments of present disclosure first transforms the teacher model in such a way that its embedding size matches that of the student model. This is done by augmenting a linear layer having dimensions equal to the embedding size of the student model and a projector network to the teacher model. Then the augmented layers are trained using a self-supervised learning technique by freezing the teacher model. Finally, the projector network is discarded to obtain a transformed teacher model. The student model is then trained using transformed teacher model by performing knowledge distillation based on similarity loss.

FIG. 3

**Description**

CROSS-REFERENCE TO RELATED APPLICATIONS AND PRIORITY

The present application claims priority to Indian application no. 202421043080, filed on June 3, 2024.

TECHNICAL FIELD

The present invention generally relates to the field of deep learning, and, more particularly, to a method and system for task agnostic distillation in foundation models.

BACKGROUND

The decadal plan for semiconductors, a recent report from the Semiconductor Research Corporation (SRC), underscores the energy challenge confronting the computing industry. By the year 2050, the global computing industry is projected to process an estimated 1042 -1046 bits per second. Despite a reduction in chip-level energy consumption per bit to approximately 10-17 Joules in modern processors, the demand for computation growth has outpaced the progress of Moore's law. Consequently, by 2050, the energy consumption in general-purpose computing will approach global energy production levels. Moreover, it has been reported that more than 70 to 80% of the energy will be consumed by AI models during the inference stages rather than the training stages. To confront this challenge, radical changes to computing, particularly at the edge, are imperative. Widespread adoption of embedded intelligence at the edge offers a promising solution to reduce the energy cost of computation while addressing three critical industry requirements: (i) low latency, as transferring data to the cloud for analysis often results in unacceptable delays; (ii) reliability, as communication over cellular networks is prone to packet drops which can be detrimental for critical applications; and (iii) privacy concerns, as transmitting data over the public internet raises privacy issues, especially for sensitive data such as personal health information. However, computing at the edge presents significant challenges due to constraints in computation, memory, bandwidth, and power. These limitations complicate the traditional approach of creating AI models capable of handling data variability, diversity, and dynamic operating conditions. Constrained devices cannot host complex models with billions of parameters and memory requirements. To deploy edge computing solutions at scale, the need for energy-efficient edge-friendly architectures with the aforementioned abilities becomes increasingly imperative.

Deployment of Artificial Intelligence (AI) and Machine Learning (ML) models for intelligent sensor data analytics in Industrial Internet of Things (IIoT), robotics, autonomous vehicles and so on is challenging due to the constrained nature of computing devices used in these settings. Real-time analysis of sensor data, including images, videos, and time-series streams, with guaranteed accuracy and low inference latency is essential while keeping the energy consumption low. AI or ML models are increasingly deployed on edge devices to address the need for low latency, data privacy, and reliability. However, existing on-field devices are often resource constrained making it impractical to replace them with more powerful variants. High-performing Deep Neural Network (DNN) models designed for high-accuracy analysis cannot be directly deployed on legacy hardware or smaller micro-controllers. There is a need to optimize DNN models for smaller edge systems while ensuring they can handle data variability, diversity, and environmental variations in standard operating conditions.

The current focus of deploying on-device AI models at the edge is primarily on task-specific applications, where models are trained for a limited range of operations, such as classification limited to a predefined set of classes. However, the landscape of edge-enabled intelligence is evolving towards more complex scenarios involving diverse learning conditions, dynamic operational environments, and simultaneous management of multiple tasks. For example, in environments like warehouses or smart factories, Automated Guided Vehicles (AGVs) must negotiate various data modalities, including images, videos, and sensor data, to execute tasks safely in real-time. Similarly, autonomous vehicles require real-time processing of diverse data types under fluctuating network conditions and varying environmental characteristics that can radically change from city to city, between adjacent localities within a given city, and even within the same locality at two different times or during different weather conditions. Experts argue that the dynamism in the operating environment and impracticability of real-time retraining render traditional learning from labelled classes ineffective - an argument that makes building of generalized easily transferable compact and execution-ready models the first step towards proper scaled-up edge intelligence.

Foundation Models (FMs) are DNN models that are pre-trained on massive unlabelled datasets to handle a wide variety of tasks and are popularly used in the field of generative AI. Although FMs can be adapted to a diverse set of downstream tasks with zero or minimal training, their large sizes make them prohibitive for constrained devices at the edge. Standard model size reduction methods can sparsify a large FM, but the zeroed-out weights still contribute to the model size. Moreover, sophisticated pruning methods such as Lottery Ticket Hypothesis (LTH) require multiple re-training cycles during pruning, which are highly resource intensive when large FMs are involved. Neural Architecture Search (NAS) technique for generating tiny models can be used to synthesize edge-friendly models from scratch. However, for complex models, this approach is time and resource-intensive, and it ignores the existing capabilities of FMs and other high-quality DNN models. Only a limited number of NAS approaches such as the use of Bayesian transfer can leverage existing models, but such methods have been used for task-specific transfer, and generally not performed on models as large as FMs. Knowledge Distillation (KD) with a suitable student architecture can be used to transfer knowledge from an existing FM to a compact, task-specific model. But this requires retraining for every new task and dataset to generate task-specific models which although compact and edge-friendly, do not meet the generalization requirement. Some of the state-of-the-art task-agnostic self-supervised knowledge distillation methods perform contrastive loss-based learning. However, to make contrastive learning effective, specialized designs are required. Firstly, overlap between positive samples in the representation space needs to be reduced. To address this, some of the prior arts make use of encoder architectures with enhanced receptive fields. Secondly, a large number of negative samples are a must for learning good representations which can be addressed by using memory banks or queues. However, this requires huge computing infrastructure for large datasets such as ImageNet. Further, FMs which act as teacher model often have multiple components for multi-modal learning and larger representation size near the last layers while the student model is generally small in size. Thus, there is a mismatch between size of embeddings generated by the teacher model and the student model due to which performing knowledge distillation is challenging.

SUMMARY

Embodiments of the present disclosure present technological improvements as solutions to one or more of the above-mentioned technical problems recognized by the inventors in conventional systems. For example, in one embodiment, a method for task agnostic distillation in foundation models is provided. The method includes receiving i) a training dataset, ii) a pre-trained foundation model as a teacher model, and iii) a small deep neural network model as a student model. Further, the method includes obtaining an augmented training dataset comprising a first set of data and a second set of data by applying one or more data augmentation techniques on the training dataset. The method further includes computing an embedding size of the teacher model and an embedding size of the student model and determining if the computed embedding size of the teacher model and the computed embedding size of the student model are equal or not equal. Upon determining that the computed embedding size of the teacher model and the computed embedding size of the student model are not equal, the method includes transforming the teacher model by first augmenting a linear layer and a projector network to the teacher model. The dimension of the linear layer is equal to the computed embedding size of the student model. Then, the augmented linear layer and the projector network are trained using a self-supervised learning technique by freezing the teacher model and the projector network is discarded to obtain a transformed teacher model. The method further includes processing the first set of data via the transformed teacher model followed by a first projector neural network to obtain a first set of transformed embeddings and processing the second set of data via the student model followed by a second projector neural network to obtain a second set of transformed embeddings. Furthermore, the method includes calculating a similarity loss between the first set of transformed embeddings and the second set of transformed embeddings and training the student model based on the similarity loss to distill knowledge of the transformed teacher model into the student model.

In another aspect, a system for task agnostic distillation in foundation models is provided. The system includes: a memory storing instructions; one or more communication interfaces; and one or more hardware processors coupled to the memory via the one or more communication interfaces, wherein the one or more hardware processors are configured by the instructions to receive i) a training dataset, ii) a pre-trained foundation model as a teacher model, and iii) a small deep neural network model as a student model. Further, the one or more hardware processors are configured by the instructions to obtain an augmented training dataset comprising a first set of data and a second set of data by applying one or more data augmentation techniques on the training dataset. The one or more hardware processors are configured by the instructions to further compute an embedding size of the teacher model and an embedding size of the student model and determine if the computed embedding size of the teacher model and the computed embedding size of the student model are equal or not equal. Upon determining that the computed embedding size of the teacher model and the computed embedding size of the student model are not equal, the one or more hardware processors are configured by the instructions to transform the teacher model by first augmenting a linear layer and a projector network to the teacher model. The dimension of the linear layer is equal to the computed embedding size of the student model. Then, the augmented linear layer and the projector network are trained using a self-supervised learning technique by freezing the teacher model and the projector network is discarded to obtain a transformed teacher model. The one or more hardware processors are further configured by the instructions to process the first set of data via the transformed teacher model followed by a first projector neural network to obtain a first set of transformed embeddings and process the second set of data via the student model followed by a second projector neural network to obtain a second set of transformed embeddings. Furthermore, the one or more hardware processors are configured by the instructions to calculate a similarity loss between the first set of transformed embeddings and the second set of transformed embeddings and then train the student model based on the similarity loss to distill knowledge of the transformed teacher model into the student model.

In yet another aspect, there are provided one or more non-transitory machine-readable information storage mediums comprising one or more instructions which when executed by one or more hardware processors cause a method for task agnostic distillation in foundation models. The method includes receiving i) a training dataset, ii) a pre-trained foundation model as a teacher model, and iii) a small deep neural network model as a student model. Further, the method includes obtaining an augmented training dataset comprising a first set of data and a second set of data by applying one or more data augmentation techniques on the training dataset. The method further includes computing an embedding size of the teacher model and an embedding size of the student model and determining if the computed embedding size of the teacher model and the computed embedding size of the student model are equal or not equal. Upon determining that the computed embedding size of the teacher model and the computed embedding size of the student model are not equal, the method includes transforming the teacher model by first augmenting a linear layer and a projector network to the teacher model. The dimension of the linear layer is equal to the computed embedding size of the student model. Then, the augmented linear layer and the projector network are trained using a self-supervised learning technique by freezing the teacher model and the projector network is discarded to obtain a transformed teacher model. The method further includes processing the first set of data via the transformed teacher model followed by a first projector neural network to obtain a first set of transformed embeddings and processing the second set of data via the student model followed by a second projector neural network to obtain a second set of transformed embeddings. Furthermore, the method includes calculating a similarity loss between the first set of transformed embeddings and the second set of transformed embeddings and training the student model based on the similarity loss to distill knowledge of the transformed teacher model into the student model.

It is to be understood that both the foregoing general description and the following detailed description are exemplary and explanatory only and are not restrictive of the invention, as claimed.

## BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 illustrates an exemplary block diagram of a system for task agnostic distillation in foundation models, according to some embodiments of the present disclosure.

FIGS. 2A and 2B collectively referred to as FIG. 2 is a flow diagram illustrating a method for task agnostic distillation in foundation models, according to some embodiments of the present disclosure.

FIG. 3 is an alternate representation of the method of FIG. 2, according to some embodiments of the present disclosure.

## DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

Deep Learning (DL) models (alternatively referred to as Deep Neural Network (DNN) models) have been widely used for a large number of applications. In recent times, Foundation Models (FMs) have been developed and applied for a broad range of tasks. However, due to their large size, it is challenging to deploy them on constrained devices at the edge. Various methods have been used to reduce size of the FMs out of which knowledge distillation technique is most suitable. However, existing KD approaches are not scalable. The whole process of distillation has to be repeated for each and every new dataset. Also, since FM is large and student model is desired to be much smaller in size as compared to FMs, there is a mismatch in sizes of embeddings generated by them due to which performing knowledge distillation is challenging.

In order to overcome the above-mentioned drawbacks of conventional techniques, embodiments of present disclosure provide a method and system for task agnostic distillation in foundation models. The method first transforms the FM (teacher model) in such a way that its embedding size matches that of the student model. This is done by augmenting (i) a linear layer having dimensions equal to the embedding size of the student model and (ii) a projector network to the teacher model. Then the augmented layers are trained using a self-supervised learning technique by freezing the teacher model. Finally, the projector network is discarded to obtain a transformed teacher model. Training dataset is processed through the transformed teacher model and student model to obtain a first set and a second set of embeddings, respectively. Further, a similarity loss is calculated, and the student model is trained based on the similarity loss.

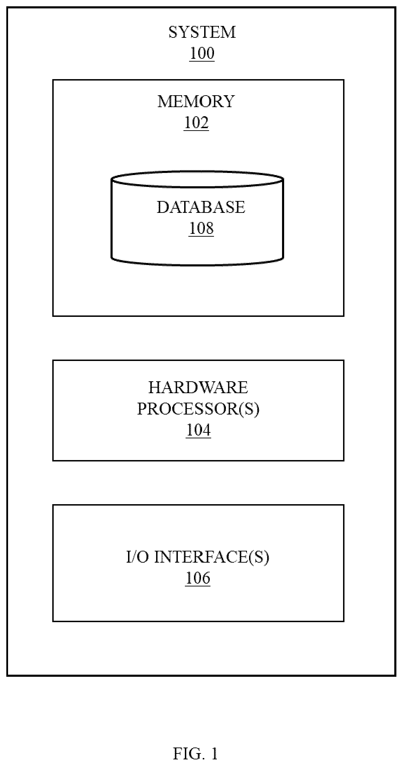

Referring now to the drawings, and more particularly to FIGS. 1 to 3, where similar reference characters denote corresponding features consistently throughout the figures, there are shown preferred embodiments, and these embodiments are described in the context of the following exemplary system and/or method.

FIG. 1 illustrates an exemplary block diagram of a system for task agnostic distillation in foundation models, according to some embodiments of the present disclosure. In an embodiment, the system 100 includes one or more processors 104, communication interface device(s) 106 or Input/Output (I/O) interface(s) 106 or user interface 106, and one or more data storage devices or memory 102 operatively coupled to the one or more processors 104. The one or more processors 104 that are hardware processors can be implemented as one or more microprocessors, microcomputers, microcontrollers, digital signal processors, central processing units, state machines, logic circuitries, and/or any devices that manipulate signals based on operational instructions. Among other capabilities, the processor(s) is configured to fetch and execute computer-readable instructions stored in the memory. In an embodiment, the system 100 can be implemented in a variety of computing systems, such as laptop computers, notebooks, hand-held devices, workstations, mainframe computers, servers, a network cloud, and the like.

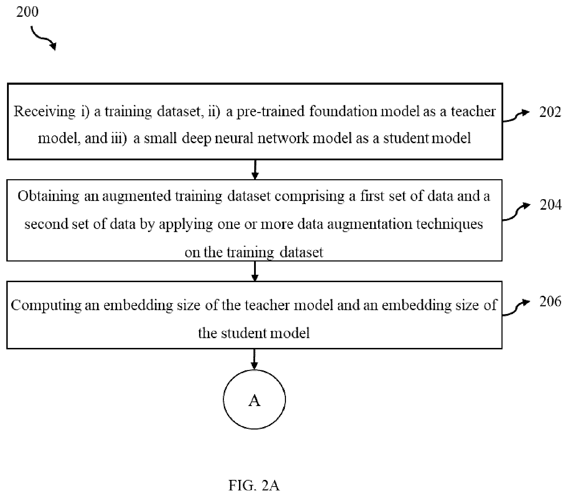

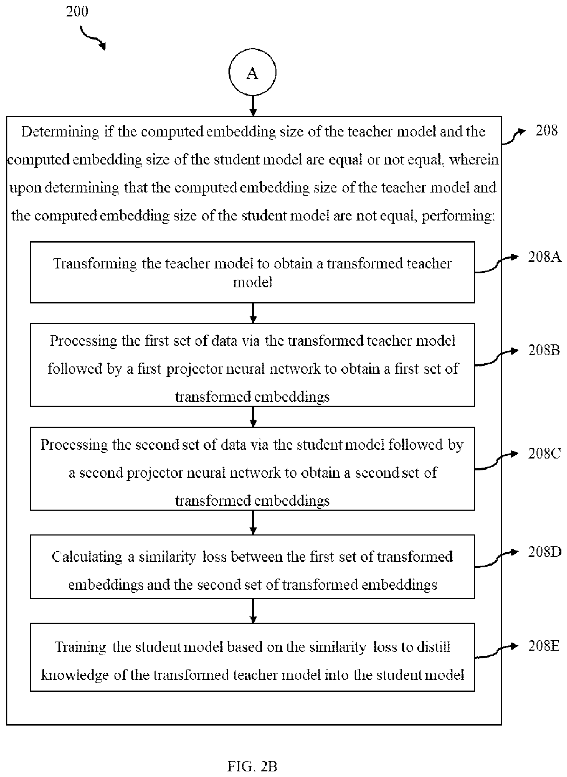

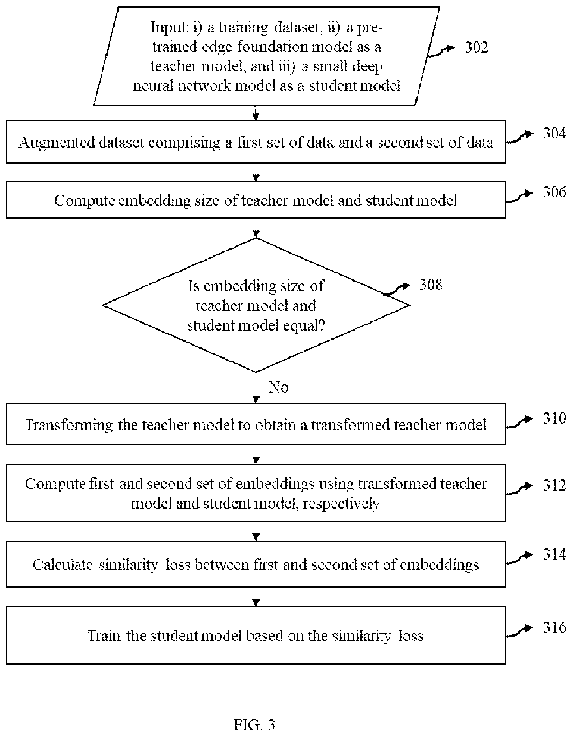

The I/O interface device(s) 106 can include a variety of software and hardware interfaces, for example, a web interface, a graphical user interface, and the like and can facilitate multiple communications within a wide variety of networks N/W and protocol types, including wired networks, for example, LAN, cable, etc., and wireless networks, such as WLAN, cellular, or satellite. The memory 102 may include any computer-readable medium known in the art including, for example, volatile memory, such as Static Random-Access Memory (SRAM) and Dynamic Random-Access Memory (DRAM), and/or non-volatile memory, such as read only memory (ROM), erasable programmable ROM, flash memories, hard disks, optical disks, and magnetic tapes. The database 108 stores information pertaining to inputs fed to the system 100 and/or outputs generated by the system (e.g., at each stage), specific to the methodology described herein. Functions of the components of system 100 are explained in conjunction with flow diagrams depicted in FIGS. 2 and 3 for task agnostic distillation in foundation models.

In an embodiment, the system 100 comprises one or more data storage devices or the memory 102 operatively coupled to the processor(s) 104 and is configured to store instructions for execution of steps of the method (200) depicted in FIGS. 2 and 3 by the processor(s) or one or more hardware processors 104. The steps of the method of the present disclosure will now be explained with reference to the components or blocks of the system 100 as depicted in FIG. 1 and the steps of flow diagrams as depicted in FIGS. 2 and 3. Although process steps, method steps, techniques or the like may be described in a sequential order, such processes, methods, and techniques may be configured to work in alternate orders. In other words, any sequence or order of steps that may be described does not necessarily indicate a requirement that the steps be performed in that order. The steps of processes described herein may be performed in any order practical. Further, some steps may be performed simultaneously.

FIG. 2 is a flow diagram illustrating a method 200 for task agnostic distillation in foundation models, according to some embodiments of the present disclosure. At step 202, the one or more hardware processors 104 are configured to obtain i) a training dataset, ii) a pre-trained foundation model (FM) as a teacher model, and iii) a small deep neural network model as a student model. For example, CLIP (Contrastive Language-Image Pre-training) is a pre-trained FM which is obtained as the teacher model. CLIP has a vision transformer and a LLM (Large Language Model) component. ResNet-9 is obtained as the student model. ResNet-9 is a very small network as compared to CLIP. The training dataset is a generic dataset, for example, ImageNet dataset. Further, at step 204 of the method 200, the one or more hardware processors 104 are configured to obtain an augmented training dataset comprising a first set of data and a second set of data by applying one or more data augmentation techniques on the training dataset. For example, if the training dataset comprises image data, then, an augmentation function $\tau$ (for example, cropping, scaling, rotation etc.) is applied on each image $x$ in the training dataset to obtain image views $x_i$ and $x_j$ which constitute the first set of data and the second set of data.

Further, at step 206 of the method 200, the one or more hardware processors 104 are configured to compute an embedding size of the teacher model and an embedding size of the student model. The embedding size is computed either by linear algebra-based calculations or by running inference on some data using the teacher and student models and measuring size of the embedding data (output from the respective models). Once the embedding sizes of teacher and student models are computed, at step 208, the one or more hardware processors 104 are configured to determine if the computed embedding size of the teacher model and the computed embedding size of the student model are equal or not equal. Upon determining that the computed embedding size of the teacher model and the computed embedding size of the student model are not equal, the one or more hardware processors 104 are configured to perform steps 208A to 208E for knowledge distillation. At step 208A, the teacher model is transformed in such a way that the embeddings generated by the teacher model after transformation matches the embedding size generated by the student model. Transformation is performed by firstly augmenting a linear layer and a projector network to the teacher model. The dimension of the linear layer is equal to the computed embedding size of the student model. Next, the augmented linear layer and the projector network are trained using a self-supervised learning technique by freezing the teacher model. The original dataset that was used to pre-train the teacher model is used to train the augmented linear layer and the projector network. For example, if CLIP is obtained as the teacher model, LAION 5B dataset can be used to transform the teacher. In an embodiment, an augmented original training dataset is obtained by applying one or more data augmentation techniques on the original training dataset. The augmented original training dataset is used to pre-train the teacher model. After training, the projector network is discarded and the complete pre-trained teacher model along with the augmented linear layer is retained to obtain a transformed teacher model.

Once the teacher model is transformed, at step 208B, the first set of data is processed via the transformed teacher model followed by a first projector neural network to obtain a first set of transformed embeddings. The transformed teacher model gives an output $h_i$ by processing the first set of data which is further processed by the first projector neural network to get the first set of transformed embeddings $z_i$. Thus, the transformed teacher model and the first projector neural network transforms the first set of data into a first representation space. Similarly, at step 208C, the second set of data is processed via the student model followed by a second projector neural network to obtain a second set of transformed embeddings. The student model gives an output $h_j$ by processing the second set of data which is further processed by the second projector neural network to get the second set of transformed embeddings $z_j$. Thus, the student model and the second projector neural network transforms the second set of data into a second representation space.

Next, at step 208D, a similarity loss is calculated between the first set of transformed embeddings and the second set of transformed embeddings. The similarity loss is calculated according to equation 1, wherein $\mathcal{D}$ is a function measuring negative cosine similarity, $z_i$ represents the first set of transformed embeddings, $z_j$ represents the third set of transformed embeddings, $h_i$ represents output of the student model, and $h_j$ represents output of the teacher model.

$$\mathcal{L} = \tfrac{1}{2}\mathcal{D}(z_i, h_j) + \tfrac{1}{2}\mathcal{D}(h_i, z_j) \ \ldots\ldots\ (1)$$

Finally at step 208E, the student model is trained based on the calculated similarity loss to distill knowledge of the transformed teacher model into the student model. Training is performed by backpropagating the loss through the student model and updating weights of the student model. As the training progresses, the student model starts to learn representations that can correctly predict the transformed embeddings from the teacher. The resulting student model after training are termed as edge foundation models. The edge foundation models are exported for direct deployment on edge devices where data diversity, change of operating environment and distribution shift is present. The method 200 may be applied on different pretrained foundation models to build a repository of edge foundation models which are task agnostic. If there is a need to adapt the trained student model (alternatively referred as edge foundation model) to a specific task, a suitable model is selected from the repository of edge foundation models to fine tune it for specific task. Fine tuning is performed by first obtaining a task-specific training dataset. Then, the trained student model is augmented with one or more neural network layers and the augmented one or more neural network layers are fine-tuned based on the task-specific training dataset. For example, a linear layer with 10 outputs for classifying CIFAR-10 data is augmented to the trained student model. Then the whole network (trained student model + augmented linear layer) is trained for only a few epochs with a low learning rate for fine-tuning. Alternatively, only the linear layer is trained keeping the other layers frozen to fine tune the model. After fine tuning, the edge foundation model is exported for direct deployment on edge device for the specific task. FIG. 3 is an alternate representation of the method of FIG. 2, according to some embodiments of the present disclosure.

EXPERIMENTS AND RESULTS

**Teacher and student models:** The method 200 was performed by obtaining vision encoder part (ResNet-101) of CLIP model as the teacher model *(*Alec Radford et al. 2021. Learning Transferable Visual Models from Natural Language Supervision. In Proceedings of the 38th International Conference on Machine Learning (Proceedings of Machine Learning Research, Vol. 139), Marina Meila and Tong Zhang (Eds.). PMLR, 8748-8763*)*. The teacher model has 44.5 million parameters. ResNet-9 is obtained as student model which has approximately 3.7 million parameters. Thus, the student model has a smaller number of parameters as compared to the teacher model.

**Comparison baselines:**

A. Few-shot adaptation: The teacher model is adapted to a target dataset by few-shot (randomly chosen 20% data subset) training. The advantage of this method is that only a minimal fine-tuning needs to be performed for the target dataset. The main disadvantage is that the model size remains almost the same as only the last layer is resized based on the target dataset. Moreover, the model has to be fine-tuned for each target dataset.

B. Task-specific distillation: The teacher model is distilled to ResNet-9 for each dataset, using the full labelled training dataset. The advantages of this method are (1) high accuracy of student model, and (2) desired model reduction. The only disadvantage is the need to distil separately for each target dataset, which is time and resource intensive.

C. Two-step distillation with contrastive learning: This requires a one-time effort to generate an Edge Foundation Model (EFM). Once done, the EFM can be adapted to several target datasets using a few-shot approach.

D. Method 200: This requires a one-time effort to generate an EFM, followed by few-shot adaptations for several target datasets.

**Results:** Efficiency and accuracy of baseline methodologies are compared with the method 200 in tables 1 and 2, respectively. The results in table 1 is in the context of a training setup on a host workstation using Ubuntu 22.04 OS, and an NVIDIA RTX A6000 - 48 GB GPU, with Python 3.10 and TensorFlow 2.14. Table 1 gives efficiency aspects of the baseline methods, experimented with CIFAR-10 dataset. Table 2 gives task-specific accuracy comparison of the baseline methods. Methods A, C, and D use only 25% data, whereas B uses full dataset.

Table 1

| Metric | A | B | C | D |
|---|---|---|---|---|
| Time taken (in hours) (knowledge distillation, fine-tuning) | NA, 0.34 | NA, 2 | 60, 0.12 | 48, 0.12 |
| Batch size | 32 | 32 | 180 | 128 |
| GPU memory (GB) | 24 | 26 | 48 | 28 |
| Parameters (millions) | 43 | 3.8 | 3.8 | 3.8 |

Table 2

| Dataset | A | B | C | D |
|---|---|---|---|---|
| CIFAR-10 | 86.2 | 90.8 | 80.6 | 85.1 |
| Stanford Cars | 97.3 | 98.2 | 88.1 | 92.6 |
| Oxford Flower-102 | 99.2 | 99.8 | 93.3 | 97.9 |
| Caltech UCSD Birds | 93.5 | 89.2 | 81.1 | 87.2 |
| North American Birds | 92.8 | 91.6 | 85.4 | 90.1 |

In Table 1, the first row shows time taken in hours. It has two components: first component is one-time training using knowledge distillation and the second component is time taken for fine tuning the trained model to a new task-specific dataset. For methods A and B, step 1 is not relevant and hence not applied. For methods C and D, the training time is large, as self-supervised distillation is performed using ImageNet dataset. Training on a large dataset preserves the generality of the EFMs. However, the transfer to task-specific dataset is very fast, 7-8 minutes for 25% CIFAR-10 dataset. Moreover, the 2 hours needed for task-specific distillation (column 2) is not fixed. It uses a full dataset and hence grows much faster than low-shot transfer. The minimum batch size for method C is 512, as it uses contrastive learning. As only 180 samples per batch could be fit in the system used for experimentation, the accuracy is not good (as shown in Table 2). The accuracy results shows that the method 200 achieves reasonably high accuracy with a small model and 25% data. It is noteworthy that fine-tuning takes a maximum of 7 minutes. As expected, the task-specific distillation (baseline method B) performs the best when trained on the full dataset. It only produces inferior results on Caltech UCSD Birds, where smaller models often perform bad. However, the recurring time and resources needed for it make it a non-scalable choice.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means, and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components.

For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, non-volatile memory, hard drives, CD ROMs, DVDs, flash drives, disks, and any other known physical storage media.

It is intended that the disclosure and examples be considered as exemplary only, with a true scope of disclosed embodiments being indicated by the following claims.

**Claims**

1. A processor implemented method (200), comprising:

   receiving (202), via one or more hardware processors, i) a training dataset, ii) a pre-trained foundation model as a teacher model, and iii) a small deep neural network model as a student model;
   obtaining (204), via the one or more hardware processors, an augmented training dataset comprising a first set of data and a second set of data by applying one or more data augmentation techniques on the training dataset;
   computing (206), via the one or more hardware processors, an embedding size of the teacher model and an embedding size of the student model;
   determining (208), via the one or more hardware processors, if the computed embedding size of the teacher model and the computed embedding size of the student model are equal or not equal, wherein upon determining that the computed embedding size of the teacher model and the computed embedding size of the student model are not equal, performing:

      transforming (208A) the teacher model by:

         augmenting a linear layer and a projector network to the teacher model, wherein dimension of the linear layer is equal to the computed embedding size of the student model;
         training the augmented linear layer and the projector network using a self-supervised learning technique by freezing the teacher model; and
         discarding the projector network to obtain a transformed teacher model;
      processing (208B) the first set of data via the transformed teacher model followed by a first projector neural network to obtain a first set of transformed embeddings;
      processing (208C) the second set of data via the student model followed by a second projector neural network to obtain a second set of transformed embeddings;
      calculating (208D) a similarity loss between the first set of transformed embeddings and the second set of transformed embeddings; and
      training (208E) the student model based on the similarity loss to distill knowledge of the transformed teacher model into the student model.

2. The method as claimed in claim 1, comprising adapting the trained student model to a specific task by:

> obtaining a task-specific training dataset;
> augmenting the trained student model with one or more neural network layers; and
> fine-tuning the augmented one or more neural network layers based on the task-specific training dataset.

3. The method as claimed in claim 1, wherein the similarity loss is calculated as $\mathcal{L} = \frac{1}{2}\mathcal{D}(z_i, h_j) + \frac{1}{2}\mathcal{D}(h_i, z_j)$, wherein $\mathcal{D}$ is a function measuring negative cosine similarity, $z_i$ represents the first set of transformed embeddings, $z_j$ represents the third set of transformed embeddings, $h_i$ represents output of the student model, and $h_j$ represents output of the teacher model.

4. A system (100), comprising:

> a memory (102) storing instructions;
> one or more Input/Output (I/O) interfaces (106); and
> one or more hardware processors (104) coupled to the memory (102) via the one or more communication interfaces (106), wherein the one or more hardware processors (104) are configured by the instructions to:
>
>> receive i) a training dataset, ii) a pre-trained foundation model as a teacher model, and iii) a small deep neural network model as a student model;
>> obtain an augmented training dataset comprising a first set of data and a second set of data by applying one or more data augmentation techniques on the training dataset;
>> compute an embedding size of the teacher model and an embedding size of the student model;
>> determine if the computed embedding size of the teacher model and the computed embedding size of the student model are equal or not equal, wherein upon determining that the computed embedding size of the teacher model and the computed embedding size of the student model are not equal, performing:
>>
>>> transform the teacher model by:
>>>
>>>> augmenting a linear layer and a projector network to the teacher model, wherein dimension of the linear layer is equal to the computed embedding size of the student model;
>>>> training the augmented linear layer and the projector network using a self-supervised learning technique by freezing the teacher model; and
>>>> discarding the projector network to obtain a transformed teacher model;
>>>
>>> process the first set of data via the transformed teacher model followed by a first projector neural network to obtain a first set of transformed embeddings;
>>> process the second set of data via the student model followed by a second projector neural network to obtain a second set of transformed embeddings;
>>> calculate a similarity loss between the first set of transformed embeddings and the second set of transformed embeddings; and
>>> train the student model based on the similarity loss to distill knowledge of the transformed teacher model into the student model.

5. The system as claimed in claim 4, wherein the one or more hardware processors are configured to adapt the trained student model to a specific task by:

> obtaining a task-specific training dataset;
> augmenting the trained student model with one or more neural network layers; and
> fine-tuning the augmented one or more neural network layers based on the task-specific training dataset.

6. The system as claimed in claim 4, wherein the similarity loss is calculated as $\mathcal{L} = \frac{1}{2}\mathcal{D}(z_i, h_j) + \frac{1}{2}\mathcal{D}(h_i, z_j)$, wherein $\mathcal{D}$ is a function measuring negative cosine similarity, $z_i$ represents the first set of transformed embeddings, $z_j$ represents the third set of transformed embeddings, $h_i$ represents output of the student model, and $h_j$ represents output of the teacher model.

7.  One or more non-transitory machine-readable information storage mediums comprising one or more instructions which when executed by one or more hardware processors cause:

    receiving i) a training dataset, ii) a pre-trained foundation model as a teacher model, and iii) a small deep neural network model as a student model;
    obtaining an augmented training dataset comprising a first set of data and a second set of data by applying one or more data augmentation techniques on the training dataset;
    computing an embedding size of the teacher model and an embedding size of the student model;
    determining if the computed embedding size of the teacher model and the computed embedding size of the student model are equal or not equal, wherein upon determining that the computed embedding size of the teacher model and the computed embedding size of the student model are not equal, performing:

    transforming the teacher model by:

    augmenting a linear layer and a projector network to the teacher model, wherein dimension of the linear layer is equal to the computed embedding size of the student model;
    training the augmented linear layer and the projector network using a self-supervised learning technique by freezing the teacher model; and
    discarding the projector network to obtain a transformed teacher model;

    processing the first set of data via the transformed teacher model followed by a first projector neural network to obtain a first set of transformed embeddings;
    processing the second set of data via the student model followed by a second projector neural network to obtain a second set of transformed embeddings;
    calculating a similarity loss between the first set of transformed embeddings and the second set of transformed embeddings; and
    training the student model based on the similarity loss to distill knowledge of the transformed teacher model into the student model.

8.  The one or more non-transitory machine-readable information storage mediums as claimed in claim 7, wherein the one or more instructions which when executed by the one or more hardware processors further cause adapting the trained student model to a specific task by:

    obtaining a task-specific training dataset;
    augmenting the trained student model with one or more neural network layers; and
    fine-tuning the augmented one or more neural network layers based on the task-specific training dataset.

9.  The one or more non-transitory machine-readable information storage mediums as claimed in claim 7, wherein the similarity loss is calculated as $\mathcal{L} = \frac{1}{2}\mathcal{D}(z_i, h_j) + \frac{1}{2}\mathcal{D}(h_i, z_j)$, wherein $\mathcal{D}$ is a function measuring negative cosine similarity, $z_i$ represents the first set of transformed embeddings, $z_j$ represents the third set of transformed embeddings, $h_i$ represents output of the student model, and $h_j$ represents output of the teacher model.

SYSTEM
100

MEMORY
102

DATABASE
108

HARDWARE
PROCESSOR(S)
104

I/O INTERFACE(S)
106

FIG. 1

200

Receiving i) a training dataset, ii) a pre-trained foundation model as a teacher model, and iii) a small deep neural network model as a student model
— 202

Obtaining an augmented training dataset comprising a first set of data and a second set of data by applying one or more data augmentation techniques on the training dataset
— 204

Computing an embedding size of the teacher model and an embedding size of the student model
— 206

A

FIG. 2A

200

A

Determining if the computed embedding size of the teacher model and the computed embedding size of the student model are equal or not equal, wherein upon determining that the computed embedding size of the teacher model and the computed embedding size of the student model are not equal, performing: — 208

Transforming the teacher model to obtain a transformed teacher model — 208A

Processing the first set of data via the transformed teacher model followed by a first projector neural network to obtain a first set of transformed embeddings — 208B

Processing the second set of data via the student model followed by a second projector neural network to obtain a second set of transformed embeddings — 208C

Calculating a similarity loss between the first set of transformed embeddings and the second set of transformed embeddings — 208D

Training the student model based on the similarity loss to distill knowledge of the transformed teacher model into the student model — 208E

FIG. 2B

Input: i) a training dataset, ii) a pre-trained edge foundation model as a teacher model, and iii) a small deep neural network model as a student model → 302

Augmented dataset comprising a first set of data and a second set of data → 304

Compute embedding size of teacher model and student model → 306

Is embedding size of teacher model and student model equal? → 308

No

Transforming the teacher model to obtain a transformed teacher model → 310

Compute first and second set of embeddings using transformed teacher model and student model, respectively → 312

Calculate similarity loss between first and second set of embeddings → 314

Train the student model based on the similarity loss → 316

FIG. 3

Europäisches Patentamt

European Patent Office

Office européen des brevets

# EUROPEAN SEARCH REPORT

**Application Number**

EP 25 17 9832

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | J. FU ET AL: "Role-wise data augmentation for knowledge distillation", ARXIV.ORG, CORNELL UNIVERSITY LIBRARY, 201 OLIN LIBRARY CORNELL UNIVERSITY ITHACA, NY 14853, 19 April 2020 (2020-04-19), XP081648021, DOI: 10.48550/arXiv.2004.08861 * sections 1 and 3-5 * | 1-9 | INV. G06N3/096 G06N3/045 G06N3/082 G06N3/0895 |
| A | Y. WU ET AL: "Universal-KD: attention-based output-grounded intermediate layer knowledge distillation", PROCEEDINGS OF THE 2021 CONFERENCE ON EMPIRICAL METHODS IN NATURAL LANGUAGE PROCESSING (EMNLP'21), 7 November 2021 (2021-11-07), pages 7649-7661, XP093319794, DOI: 10.18653/v1/2021.emnlp-main.603 * sections 1 and 3-5; appendix A * | 1-9 | |
| A | C. YANG ET AL: "CLIP-KD: an empirical study of CLIP model distillation", ARXIV.ORG, CORNELL UNIVERSITY LIBRARY, 201 OLIN LIBRARY CORNELL UNIVERSITY ITHACA, NY 14853, 7 May 2024 (2024-05-07), XP091748001, DOI: 10.48550/arXiv.2307.12732 * sections 1 and 3; appendix C * | 1-9 | TECHNICAL FIELDS SEARCHED (IPC) G06N |

-/--

The present search report has been drawn up for all claims

| Place of search | Date of completion of the search | Examiner |
|---|---|---|
| The Hague | 30 September 2025 | Douarche, Nicolas |

Europäisches
Patentamt

European
Patent Office

Office européen
des brevets

## EUROPEAN SEARCH REPORT

**Application Number**

EP 25 17 9832

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | A. RASHID ET AL: "MATE-KD: masked adversarial text, a companion to knowledge distillation", ARXIV.ORG, CORNELL UNIVERSITY LIBRARY, 201 OLIN LIBRARY CORNELL UNIVERSITY ITHACA, NY 14853, 12 May 2021 (2021-05-12), XP081962671, DOI: 10.48550/arXiv.2105.05912 * section 2 * | 1-9 | |
| A | Y. XUE ET AL: "Investigating the benefits of projection head for representation learning", ARXIV.ORG, CORNELL UNIVERSITY LIBRARY, 201 OLIN LIBRARY CORNELL UNIVERSITY ITHACA, NY 14853, 18 March 2024 (2024-03-18), XP091702661, DOI: 10.48550/arXiv.2403.11391 * sections 2-4 * | 1-9 | |

TECHNICAL FIELDS
SEARCHED      (IPC)

The present search report has been drawn up for all claims

| Place of search | Date of completion of the search | Examiner |
|---|---|---|
| The Hague | 30 September 2025 | Douarche, Nicolas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.......................................................................................
& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202421043080

**Non-patent literature cited in the description**

- Learning Transferable Visual Models from Natural Language Supervision. **ALEC RADFORD et al.** Proceedings of the 38th International Conference on Machine Learning (Proceedings of Machine Learning Research. 2021, vol. 139, 8748-8763